# EUROPEAN PATENT SPECIFICATION

(11) **EP 4 292 227 B1**
(45) Date of publication and mention of the grant of the patent: **30.07.2025**
(21) Application number: 21714850.1
(22) Date of filing: 22.03.2021
(51) Int. Cl.: H04L 67/141, H04L 67/142, H04L 69/329, H04L 67/02, H04L 67/125, H04L 67/146, H04L 67/104, H04L 43/0852, H04L 43/0876, H04L 43/20

(54) **DECENTRALIZED SESSION MANAGEMENT**
DEZENTRALISIERTE SITZUNGSVERWALTUNG
GESTION DE SESSION DÉCENTRALISÉE

(43) Date of publication of application: 20.12.2023
(73) Proprietor: Huawei Technologies Co., Ltd., Shenzhen, Guangdong 518129 (CN)
(72) Inventor: HECKER, Artur, 80992 Munich (DE); XIAO, Xun, 80992 Munich (DE)
(74) Representative: Roth, Sebastian
(86) International application number: PCT/EP2021/057260
(87) International publication number: WO 2022/199786

(56) References cited:
- US-A1- 2019 158 408
- US-B1- 10 299 128

## Description

### TECHNICAL FIELD

The present disclosure relates to managing sessions in a mobile communication network, for instance, in the 5^{th} generation wireless mobile network (5G network). In particular, the disclosure proposes a first entity and a method for a decentralized session management.

### BACKGROUND

The 5G network has been commercialized and is being rolled out by operators world-wide. The 5G network is expected to support many new types of connections between various devices such as cars, wearables, sensors and actuators from both private and industrial environment. The new types of connections usually imply very distinct requirements of service requests, and thereby pose challenges to the management and control layer of the 5G network.

In particular, supporting various new types of services implies a deeper impact on the core network architecture. In 5G, the core network cannot anymore apply the same treatment rules to various types of data flows such as human voice and data, massive Internet of things (IoT) connections and ultra-low latency communications, which are from different entities. Instead, for 5G a service-based architecture (SBA) is proposed, wherein network functions (NFs) are modularized and interact with each other over a message bus called service-based interfaces (SBIs). In this way, a network service can be composed by different sets of NFs, and different services can share a same set of NF components, which largely improves the flexibility and scalability of the core network.

Additionally, the 5G network engages a control plane (CP) and user plane (UP) decoupling strategy, which separately defines the behaviors of CP and UP NFs. This not only provides a distributed and flexible deployment option, but also enables a local control possibility, so that a data flow request can be handled promptly. With network function virtualization (NFV) and software-defined network (SDN) technologies, a core network does not have to locate at one place as a single system. Instead, multiple core network systems can co-exist and operate the entire mobile network together.

One of the main tasks of a wireless mobile network is "session management". The core network receives a connection request from a user, e.g., via a user equipment (UE), and then establishes a connection between a source node and a destination node. This task is collectively handled by the access and mobility management function (AMF) and the SMF that controls a set of user plane function (UPF) resources. Specifically, according to the packet data unit (PDU) session request, which is transmitted from the AMF, a SMF will first of all identify available UPF resources that can accommodate such a PDU session, and will then configure the identified UPF entities with corresponding parameters. The result of this UPF configuration deployment will be provided back to the UE along the AMF. After that the UE knows where and how its data packets should be sent so that the requested PDU session is established.

It may seem that session management is trivial and straightforward, if the following two conditions are satisfied: 1) CP NFs (mainly the SMF entities) can have timely global information about the UP NFs (mainly the UPF entities); 2) the decision making of the SMF entities are completely conflict-free.

Unfortunately, however, any of the two conditions usually do not hold easily in reality. Specifically, the first condition has already been broken in the current 5G deployment, wherein the UPF entities are now deployed closer to the edge of the mobile network while being far from the SMF entities, which are deployed in a centralized telecom cloud. This results in delays and asynchrony when updating UPF states. The second condition may also be broken due to the inefficiency of a conflict resolution mechanism employed among the SMF entities, and/or possibly because of the asynchronous UPF states. The situation will become much more challenging beyond 5G, especially if the SMF entities (or even the whole core network) goes distributed while no centralized controlling SMF exists to aggregate all UPF states and resolve conflicts.

US 2019158408 A1 discloses Application Function (AF) influenced routing for peer-to-peer (P2P) communications.

### SUMMARY

The present invention is defined by the appended independent claims . Preferred embodiments are covered by the appended dependent claims.

When there are multiple NF entities existing (e.g., multiple SMFs and UPFs), a coordination among those NFs is inevitable in a distributed system. A typical way is to employ a hierarchical structure where logically there will be a master node (at a higher layer) to coordinate other peer nodes (at one or more lower layer(s)). This includes both the cases of the master node being a separate node or system, and of the master being just one of the peer nodes. Also, the master node does not have to be static, but can be dynamically assigned as needed.

In the current 5G system, the core network part usually locates at a dedicated telecom cloud data center (i.e., a central office), wherein CP NFs run at the same place and even some UPFs also locate together. When multiple SMF entities are instantiated in the core network (for the purposes of reliability, resilience and load balance), an operator can specify a master SMF entity among them, so that a final judgement can be made whenever there is any conflict (e.g., occurring on synchronizing UPF states and PDU session deployments).

Specifically, if there is a set of SMF entities that are assigned to manage different UPF entities in distinct regions, respectively, considering a PDU session request from one region A to another region B, this involves at least two SMF entities (from both regions A and B) to conclude a decision of how such a PDU session request can be accommodated. Since every SMF entity can only observe and control the UPF entities in its own region, it is not trivial that each SMF can simply apply the prescribed UPF configurations directly. In other words, a higher layer coordination is necessary, and the combination of the prescribed UPF configurations will be validated by a master SMF entity.

In view of the above, conventional mechanisms have some key disadvantages, which are discussed in the following. Firstly, scalability is an issue. A hierarchical scheme may show a bottleneck issue in the system when the reconciliation requests increase. In future mobile networks, with the increasing density of cells, the number of CP NFs will increase accordingly. Naturally, the number of tiers will increase as well. As a result, potential conflicts will be aggregated layer by layer, and the entities at the higher layer will suffer overloading issues when the conflict resolution requests increase. In particular, SMF entities could experience even worse because in future mobile networks there will be much more UPF entities deployed at the edge of the network, i.e., closer to the users. This certainly accompanies the corresponding number of SMF entities increased in the network, which eventually concerns the master SMF entities in the network. In addition, higher hierarchies also suffer longer delays when considering the UPF state synchronization. Consequently, it could end up with a situation where a conflict cannot be handled, or only falsely, based on non-synchronized UPF states.

Secondly, flexibility is an issue. In particular, determining master (SMF) node(s) is not a trivial task job. It is very likely that such a selection has to depend on the exact dynamic situation of the current network, on-going services and so on, which may influence the loads to the current determined master (SMF) node(s). As a result, load balancing among the master (SMF) nodes has to be considered, or even more complicated, the set of master (SMF) nodes has to be updated from time to time. This may further influence the underlying services, which may cause interruptions. Therefore, pre-planning a master node, or several master nodes, is very difficult and such a hierarchical scheme restricts the flexibility of the core network.

Thirdly, reliability is an issue. In particular, due to the existence of the master (SMF) node(s) in the system, single-point-of-failure issue is obvious. Failures could be system failures such as overloading, outages, and incorrect decision making. Failures could also be caused by malicious attacks. As a public and nationwide critical infrastructure, a second of out of service may easily affect many users (including both human beings and machinery type entities), especially, mobile network in future may run critical services, such a failure may cause serious consequences.

In view of the above-mentioned limitations and disadvantages, the invention aims to provide a decentralized session management scheme in a mobile network. An objective is, in particular, to provide a way to fully decentralize the session management without relying on any centralized entity, while asynchronous PDU sessions can still be handled conflict-free.

The objective is achieved by the embodiments of the invention as described in the enclosed independent claims.

Advantageous implementations of the embodiments of the invention are further defined in the dependent claims.

It has to be noted that all devices, elements, units and means described in the present application could be implemented in the software or hardware elements or any kind of combination thereof. All steps which are performed by the various entities described in the present application as well as the functionalities described to be performed by the various entities are intended to mean that the respective entity is adapted to or configured to perform the respective steps and functionalities. Even if, in the following description of specific embodiments, a specific functionality or step to be performed by external entities is not reflected in the description of a specific detailed element of that entity which performs that specific step or functionality, it should be clear for a skilled person that these methods and functionalities can be implemented in respective software or hardware elements, or any kind of combination thereof, insofar each of the above-mentioned combinations is encompassed within the scope of the invention as defined by the appended claims.

### BRIEF DESCRIPTION OF DRAWINGS

The above described aspects and implementation forms will be explained in the following description of specific embodiments in relation to the enclosed drawings, in which
- FIG. 1: shows a first entity and another first entity according to embodiments of this disclosure.
- FIG. 2: shows a general architecture including distributed SMF entities according to embodiments of this disclosure.
- FIG. 3: shows an interaction procedure between SMF entities according to embodiments of this disclosure.
- FIG. 4: shows a SMF entity deployment interaction procedure based on performing a distributed consensus protocol.
- FIG. 5a: shows a table including a SMF entity API list and a corresponding endorsement policy.
- FIG. 5b: shows a table including competition options for establishing a distributed consensus result among entities according to embodiments of this disclosure.
- FIG. 6: shows a PDU session request submission procedure.
- FIG. 7: shows a table including PDU session request parameters.
- FIG. 8: shows a PDU session request processing procedure based on a distributed consensus protocol.
- FIG. 9: shows a table including UPF state retrieval event field descriptions.
- FIG. 10: shows a UPF state retrieval, process, and configuration calculation procedure based on a distributed consensus protocol.
- FIG. 11a: shows a table including UPF state information for a PDU session request.
- FIG. 11b: shows a table including a configuration list for a flow entry deployment in an UPF session configuration event.
- FIG. 12: shows a PDU session request acknowledgement and establishment procedure based on a distributed consensus protocol.
- FIG. 13: shows a table including UE parameters for accessing a deployed PDU session channel.
- FIG. 14: shows a flow-diagram of a method according to an embodiment of this disclosure.

### DETAILED DESCRIPTION OF EMBODIMENTS

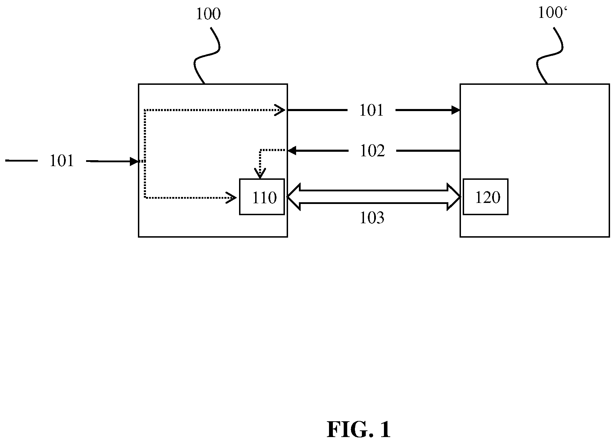

FIG. 1 shows a first entity 100 according to an embodiment of this disclosure. The first entity 100 is configured to perform a decentralized session management (together with one or more other first entities 100'). The first entity 100 may be a network resource node and/or may be configured with a SMF. That is, the first entity 100 may be a SMF entity. The first entity 100 may be referred to as SMF entity 100 in this disclosure. In this case, the first entity 100 is configured with a SMF. Likewise the one or more other first entities 100' may be referred to as SMF entities 100' in this disclosure. In this case, each of the one or more other first entities 100' is configured with a SMF. The session that may be managed in a decentralized manner by the first entities 100, 100' may be a PDU session.

The first entity 100 is configured to receive a first transaction 101, which indicates information of a first session-management-related message. The first session-related message may be any message that is related to the establishing and/or managing of the session, e.g., of the PDU session. The first session-related message may be or comprise, for example, a (PDU) session request message, a state reply message issued during the (PDU) session establishment, or a SMF deployment message. Details thereof will be explained later.

The first entity 100 is further configured to send the first transaction 101 to the one or more other first entities 100'. The first entity 100 may thereby send the first transaction 101 directly or indirectly to the other first entities 100'. For instance, it may send the first transaction 101 directly to all other first entities 100' it is connected to, and those other first entities 100' may forward it to yet other first entities 100'. The first entity 100 may also receive and send more than one first transaction 101. Each of these one or more other first entities 100' may be configured to function like the first entity 100 is configured to function in this disclosure. That is, the first entity 100 could also be one of the other first entities 100' (at a different time or in a different scenario) and vice versa. The first entity 100 and the one or more other first entities 100' may form a distributed system of first entities 100, 100'. If they are configured with SMFs, they may form a distributed system consisting of SMF entities 100, 100'.

The first entity 100 is further configured to receive one or more second transactions 102 from the one or more other first entities 100'. Thereby, each second transaction 102 indicates information of a second session-management-related message. Each second transaction 102 may have been received by one of the other first entities 100', like the first transaction 101 is received by the first entity 100. Further, like the first entity 100 sending the first transaction 101 to the one or more other first entities 100', each of the other first entities 100' may send one or more second transactions 102 to the first entity 100 and in addition to each of the one or more first entities 100'. Again, each other first entity 100' may send its one or more second transactions 102 indirectly or directly to the other first entities 100, 100'.

The first entity 100 is further configured to compose a first transaction set 110, wherein the first transaction set 110 includes at least one of the first transaction 101 (which it sent to the other first entities 100') and one or more of the second transactions 102 (which it received from the other first entities 100'). In a similar manner, each of the one or more other first entities 100' may compose a second transaction set 120, i.e., one or more second transaction sets 120 may be formed (wherein the second transaction sets 120 are typically not identical to each other, but differ from each other, while it is not excluded that two or more of the second transaction sets 120 are identical). Each of the second transaction sets 120 may include at least one of the first transaction 101 and one or more of the second transactions 102.

Then, the first entity 100 is configured to perform a distributed consensus protocol 103, together with the one or more other first entities 100', to obtain a consensus result. That is, the first entity 100 and the other first entities 100' may perform the distributed consensus protocol 103 with each other, i.e., as a group or distributed system. The consensus result is reached by performing the consensus protocol 103. The consensus result indicates whether the first entity 100 is entitled to propose the first transaction set 110 in the next step, or whether (and which) one of the other first entities 100' is entitled to propose its second transaction set 120 in the next step. The distributed consensus protocol 103 determines a winner first entity among the first entity 100 and the one or more other first entities 100', i.e., among the distributed group of first entities 100, 100'. The winner first entity is the one entitled to propose its transaction set (i.e., either the first transaction set 110 if the first entity 100 is the winner entity, or one of the second transaction sets 120 if one of the other first entities 100' is the winner entity) in the next step. The winner entity proposes its transaction set 110, 120, by broadcasting the transaction set 110, 120 as a so-called accepted transaction set to all first entities 100, 100', which are not determined to be the winner entity. If the consensus result indicates that the first entity is entitled to propose the first transaction set, the first entity is configured to send the first transaction set together with a verifiable evidence of the consensus result as an accepted transaction set to the one or more other first entities, wherein, if the consensus result indicates that the first entity is not entitled to propose the first transaction set and/or that one of the other first entities is entitled to propose the second transaction set, the first entity is configured to discard the first transaction set and receive the second transaction set as an accepted transaction set from the other first entity.

Any one or each of the first entity 100 and the one or more other first entities 100' may comprise a processor or processing circuitry (not shown in FIG. 1) configured to perform, conduct or initiate the various operations of the respective first entity 100, 100' described herein. The processing circuitry may comprise hardware and/or the processing circuitry may be controlled by software. The hardware may comprise analog circuitry or digital circuitry, or both analog and digital circuitry. The digital circuitry may comprise components such as application-specific integrated circuits (ASICs), field-programmable arrays (FPGAs), digital signal processors (DSPs), or multi-purpose processors.

Any one or each of the first entity 100 and/or the one or more other first entities 100' may further comprise memory circuitry, which stores one or more instruction(s) that can be executed by the processor or by the processing circuitry, in particular under control of the software. For instance, the memory circuitry may comprise a non-transitory storage medium storing executable software code which, when executed by the processor or the processing circuitry, causes the various operations of the respective first entity 100, 100' to be performed.

In one embodiment, the processing circuitry comprises one or more processors and a non-transitory memory connected to the one or more processors. The non-transitory memory may carry executable program code which, when executed by the one or more processors, causes the respective first entity 100, 100' to perform, conduct or initiate the operations or methods described herein.

As mentioned above, the first entity 100 may be configured as a SMF entity 100. Likewise, any one or each of the other first entities 100' may be configured as an (other) SMF entity 100'. Thus, the first entity 100 and the one or more other first entities 100' may form a group of distributed SMF entities 100, 100'. These SMF entities 100, 100' may together perform the distributed session management, in particular, the distributed management of a PDU session. Thereby, the SMF entities 100, 100' may also interact with other network entities, for instance, with one or more second entities. In particular, one or more second entities configured with a UPF, i.e., one or more UPF entities. Moreover, the (first and second) session-related-messages may comprise PDU session request messages that are respectively received by the SMF entities 100, 100' from AMF entities, or state reply messages that are respectively received by the SMF entities 100, 100' from the UPF entities, or SMF deployment messages that are respectively received by the first entities 100, 100' (not yet configured with SMFs, e.g., the network resource nodes) with the purpose of deploying SMFs on these network resource nodes to configure and obtain the SMF entities 100, 100'.

In the following, further and more detailed embodiments of this disclosure are described, wherein the first entities 100, 100' are exemplarily SMF entities 100, 100' or network resource nodes that will be configured with SMFs. Further, the second entities are exemplarily UPF entities. However, before introducing these embodiments of the disclosure, some desirable requirements are first introduced. In particular, if a hierarchical organization of the SMF entities has to be removed, a distributed model (also referred to as peer-to-peer (P2P) model) may be utilized to organize the multiple SMF entities (as peers). Some technical aspects, which are beneficial to realize in this respect, are listed as follows.

The first aspect is that the SMF entities 100, 100' can establish a synchronized view of the UPF entities, so that when a PDU session request is received, every SMF entity 100, 100' can make a decision based on the latest UPF information. Without a master SMF entity (master node), this is a challenging work for a distributed SMF system.

The second aspect is that if two PDU session requests are received, planning and deploying these two PDU session requests should preferably be conflict free among the different SMF entities 100, 100'. In other words, without coordination with a third-party SMF node, the deployment configurations of the two PDU session requests shall preferably form a distributed consensus. Specifically, the deploying order, the QoS considerations and the specific configurations on overlapped UPF entities should preferably be agreed by all SMF entities 100, 100' in a distributed manner without having a master SMF node.

The third aspect is that a verified execution feedback may be needed for every SMF entity 100, 100' sending a PDU session deployment configuration to the UPF entities. This is preferable in a distributed SMF system, because there is no centralized monitoring node that can verify and provide an endorsement for the execution. This means that a desirable solution should preferably provide an execution guarantee mechanism.

The fourth aspect is that the management and maintenance of the distributed SMF system is preferably convenient. In particular, with respect to the problem this disclosure is concerned with, every SMF entity 100, 100' should preferably be in the same version that runs the same protocol. Whenever an operator needs to update the SMF version, all the SMF entities 100, 100' in the system may be updated all together efficiently. This is also challenging to a distributed system in general, because the distributed entities may be instantiated at different locations, while either on-site updating or a fully centralized management may be costly.

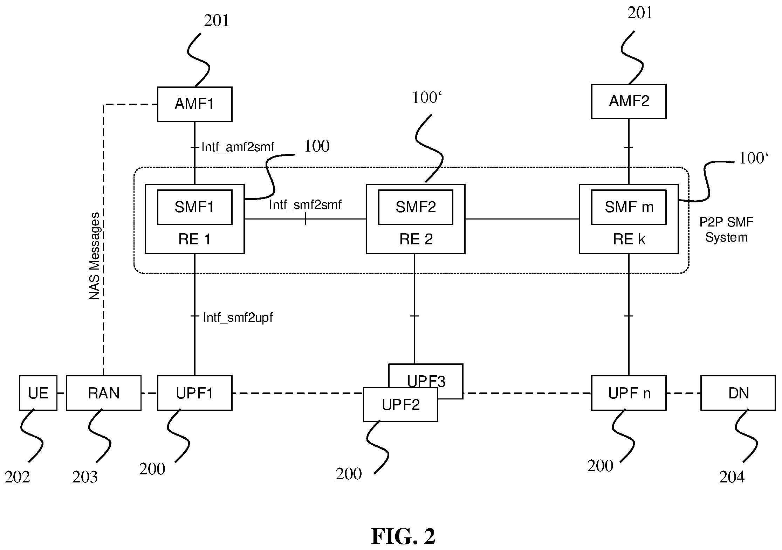

Given the above aspects, embodiments of this disclosure introduce a set of new behaviors between the (peer) SMF entities 100, 100', as well as between the SMF entities 100, 100' and the UPF entities. These newly introduced behaviors may establish a new procedure for handling a (PDU) session request from its arrival to its deployment, if possible. The details thereof are now introduced with respect to FIG. 2.

It is assumed that there are K ≥ 2 equivalent SMF entities 100, 100', which are deployed in a set of network resource nodes called network resource elements (RE) nodes (first entities 100, 100'). That is, each of the first entities 100, 100' may be one of the RE nodes configured with a SMF as a SMF entity 100, 100'. The RE nodes may be distributed nodes, which may be respectively located at different places in a mobile network, e.g., close to one or more base stations or in some edge clouds across geographical areas.

It is further assumed that every RE node can provide sufficient resources to run its SMF as a SMF entity 100, 100', such as on-board compute resource, local storage capability and network connectivity to one or more other RE nodes.

It is further assumed that there is another set of RE nodes (second entities 200) that are used to deploy M ≥ 2 UPF entities. That is, each second entity 200 is configured with a UPF to be an UPF entity 200. These other RE nodes provide sufficient resources (compute, storage and networking) to run their UPF as UPF entities 200. The difference is that an RE node configured as an UPF entity 200 could be a gateway node that interfaces to other domains outside.

It is also considered that the different RE nodes can have mutual connectivity so that the SMF entities 100, 100' and the UPF entities 200 can exchange information among each other, by either a direct connection or a multi-hop connection. The two different sets of RE nodes (i.e., the first entities 100, 100' and second entities 200, respectively) could also have overlaps, which means that any RE node could run both a SMF and a UPF to be both a SMF entity 100, 100' and UPF entity 200.

It is further considered that there is also a set of AMF entities 201 in the network. AMF entities 201 may be associated with radio access network (RAN) 203 part of the mobile network, from which PDU session requests of one or more UEs 202 may be received (e.g., as non-access stratum (NAS) message). Every AMF entity 201 may be connected to a SMF entity 100, 100', to which the received PDU session request will be forwarded by the AMF entity 201. Accordingly, the response to the PDU session request will be sent back to that AMF entity 201.

Based on the above assumptions and settings, FIG. 2 in particular illustrates a general architecture of a variety of entities in a mobile network. In order to facilitate the further discussion thereof, the names of some interfaces are defined first, wherein the interfaces are shown in FIG. 2.

Intf_amf2smf (Intf1) is an interface between an AMF entity 201 and a SMF entity 100, 100'. This interface is standardized in 3GPP SA2 as a reference point N11.

Intf_smf2smf (Intf2) is an interface between a SMF entity 100 and another SMF entity 100' of the distributed SMF system proposed in this disclosure. This interface is similar to the NF entity in one NF set, which represents a collection of the same type of NF instances in 3GPP SA2. However, an explicit reference point is not defined in 3GPP, because the current 3GPP release does not consider a distributed deployment standardization yet.

Intf_smf2upf (Intf3) is an interface between a SMF entity 100, 100' and a UPF entity 200. This interface is standardized in 3GPP SA2 as a reference point N4.

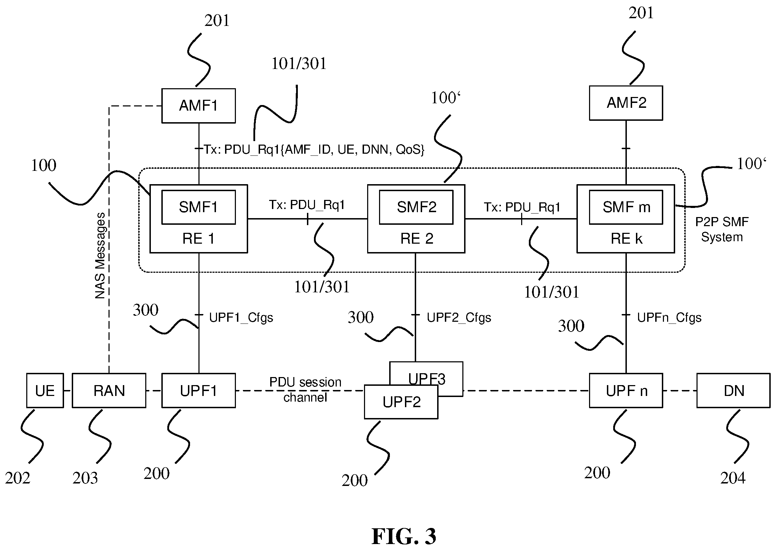

Based on the above-described interfaces, and the various entities and the architecture shown in FIG. 2, which includes the distributed SMF entities 100, 100', the AMF entities 201, the UPF entities 200, a DN 204 to which a request for a session relates, and the UE 202 in the RAN 204, a concept of embodiments of this disclosure is further illustrated in FIG. 3. Relevant procedures shown in FIG. 3 are described below.

Firstly, a PDU session request submission procedure is considered. This interaction occurs over the Intf1. Thereby, an AMF entity 201 receives a PDU session request from a UE 202 via the RAN 203. The AMF entity 201 composes the first transaction ("Tx") 101 based on the PDU session request. Thus, the first transaction 101 is in this case a session transaction 301. The session transaction 301 comprises the information contained in the PDU session request. The AMF entity 201 submits the session transaction 301 to a SMF entity (in FIG. 2 the first SMF entity 100, "SMF1")), which is associated with the AMF entity 201. The information could contain (but is not limited to): the ID of the UE 202 ("UE_ID"), the ID of the AMF identity 201 ("AMF_ID"), the data network number (DNN) of the DN 204 ("DNN"), one or more required QoS metrics ("QoS"), and necessary authentication information (such as a signature of the submitting AMF 201). More importantly, the submission of the session transaction 301 may also point to an application interface (API) provided by the SMF entity 100.

Next, a PDU session proposal and feedback procedure is considered. This interaction occurs over the Intf2. The received session transaction 301, including the information contained in the PDU session request, may be first of all locally validated by the receiving first SMF entity 100. This local validation may include (but is not limited to) verifying the authentication information contained in the session transaction 301 (e.g. the signature of the submitting AMF entity 201), the permission of the UE 202 to access the DN 204, and so on. After the local validation is finished and passes, the first SMF entity 100 sends the validated session transaction 301 to one or more other (peer) SMF entities 100' ("SMF2"..."SMF m"). In particular, it sends it to the directly connected other SMF entities 100'. Likewise, the first SMF entity 100 may receive second session transactions 102 from the other SMF entities 100', and may then form the first transactions set 110. The first transaction set 110 may then be provided as proposal to the whole distributed SMF system. The distributed SMF entities 100, 100' may consider the proposal by performing the distributed consensus protocol 103, and a final result will be returned back to the proposer (i.e., in this case the first SMF entity 100 that triggered the proposal of the first transaction set 110). Notably, the distributed consensus protocol 103 may be performed during a formation period, wherein all proposed session transaction sets 110, 120 (including the second transaction sets 120 composed by the other SMF entities 100', which also include the second session transactions 102) will compete each other to win the priority to be processed in the next stage. This competition can happen in either an interactive or a non-interactive way. More details on this aspect will be provided below. The final result to the proposed session transaction set will be the consensus result indicating either an ACCEPT or a REJECT. That is, indicating whether the first SMF entity 100 is entitled to propose the first transaction set 110 or whether one of the other SMF entities 100' is entitled to propose a second transaction set 120. For a rejected session transaction set 110, 120, the proposer proceeds to an abortion stage. For an accepted transaction set 110, 120, the proposer enters the next stage for execution. The distributed consensus formation period fundamentally differs from the existing hierarchical SMF architecture. In this stage, there is no centralized entity that makes the final decision.

Next, a PDU session request execution procedure is considered. As an outcome of the previous step, a transaction set 110, 120 of session transactions each including information of a PDU session requests are selected and ready for further execution. The accepted transactions set 110, 120 (i.e. with the information of accepted PDU session requests) may then be sequentially processed by every SMF entity 100, 100' in the distributed SMF system. Recall that when the first session transaction 301 was submitted by the AMF entity 201 to the first SMF entity 100, an API was specified, pointing to the processing function of the SMF entity (this processing function may be a piece of program code identically replicated on every SMF entity 100, 100'). The associated function may be executed, taking the parameters contained in the session transaction 301 and triggering, for instance, the follow actions:
a. Event emission, i.e., an event may be triggered after the processing function is executed. This event may be emitted once by the distributed SMF system to the UPF entities 200. This event emission may take place over the Intf3. The event may specify the targeted UPF entities 200 by a UPF entity identity ("UPF_ID") and the request for the current states of the UPF entities 200. In addition, the event may also specify a callback function API, to which a UPF 200 shall report back its current states.
b. Event callback function execution, i.e., a UPF entity 200 prepares its states and triggers the callback function API contained in the received event. This callback reply may be also submitted as a state transaction to the distributed SMF system, i.e., the respective SMF entity 100, 100', and may then again go through a distributed consensus protocol 103 performed by the distributed SMF system. Eventually, the state transaction may be again selected and processed by every SMF entity 100, 100'.

The callback function execution may require multiple state replies from the UPF entities 200 to handle a PDU session request properly. When every SMF entity 100, 100' processes a UPF reply state transaction (triggering the callback function), the callback function may check whether all UPF state replies are received. If not, the callback function may store the received UPF states, while it may skip a UPF session configuration calculation. If so, it will execute UPF session configuration calculation part, which enters the following stage.

Next, a UPF session configuration calculation and deployment procedure is considered. The callback function may be triggered until an UPF reply state transaction is accepted and executed on every SMF entity 100, 100'. Whenever the prerequisite conditions are satisfied (e.g. required UPF states are gathered), the UPF session configuration calculation logic of the callback function may be executed and prescribe for every involved UPF entities 200. Similar to the event emission described above, the calculated session configuration 300 ("UPF1_Cfgs" ... "UPFn_Cfgs") for each UPF entity 200 may be also emitted as an event. Every UPF entity 200 may consume the prescribed session configuration 300, and thus the session path may be fully configured for a PDU session request. After that, an acknowledgement may be also provided back to the SMF entities 100, 100', which may then send a final response back containing the access information that is required for an UE 202 to access the deployed session via the original AMF entity 201 submitting the session transaction 301. Notably, a detailed description of unchanged procedures/interactions between the AMF entity 201 with other NFs are omitted here. For example, an authentication procedure between AMF 201 and AUSF/UDM, or the pricing check with the PCPF. These omitted procedures shall proceed as usual (standard). Moreover, a fundamental distinction to conventional solutions here is that a SMF entity 100, 100' neither makes the decision alone nor queries any master endpoint that delegates to make the final decision. Rather it is a collective and trustworthy procedure (depending on incorporated consensus protocols).

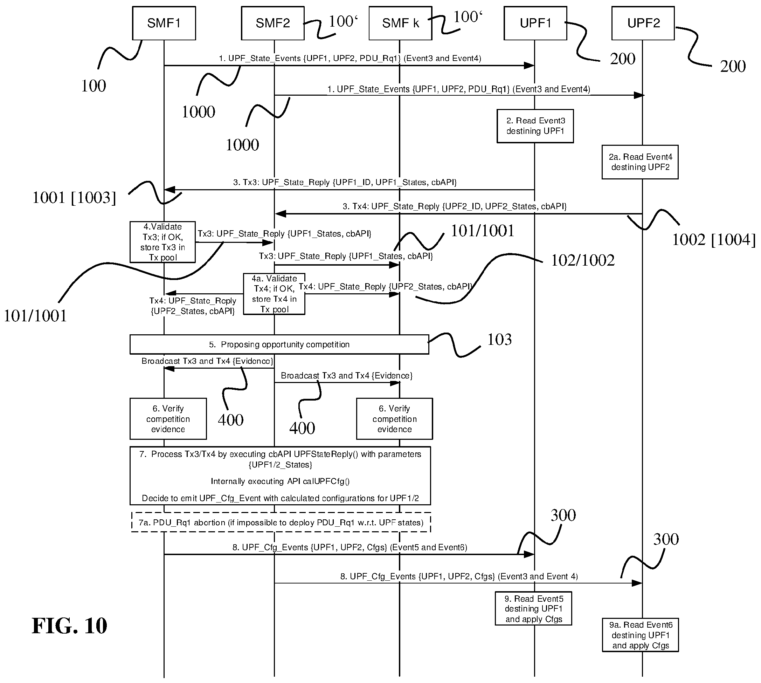

According to the above-described, instead of using a hierarchical architecture to organize distributed SMF entities, the distributed SMF entities 100, 100' in the present disclosure are organized as a distributed system featuring a distributed consensus mechanism, i.e., are capable of performing the distributed consensus protocol 103. Specifically, the following new behaviors can be summarized:
- PDU session request (PDU_Rq) proposal: The first SMF entity 100 now only sends a session transaction 301 suggesting a PDU_Rq (PDU_Rq1 = {AMF_ID, UE_ID, DNN, QoS, etc.}) to the distributed SMF system including the other SMF entities 100'.
- PDU_Rq distributed ordering: All proposed PDU_Rqs may be propagated and pooled in the distributed SMF system (i.e. on every SMF entity 100, 100'). Every SMF entity 100. 100' may compete to win the right to suggest its own batch of PDU_Rqs (i.e. its transaction set 110, 120). The winner entity can determine the order of PDU_Rqs, i.e. the session transactions 301 included in its transaction set 110, 120, that are going to be processed next. The accepted transaction set 110, 120 of selected PDU_Rqs is broadcast to the whole system, so that e.g. the first SMF entity 100 gets a result whether its transaction set 110 including the PDU_Rq1 is accepted or rejected.
- UPF state event emission and state reply: Every SMF entity 100, 100' receives the accepted transaction set 110, 120 (containing each PDU_Rq) and sequentially starts to process each PDU_Rq. This triggers an UPF state retrieval event for every involved UPF entity 200 (e.g. UPF1_StateReadEvent). An UPF entity 200 handles such an event by replying its current states back to the distributed SMF system, and indicating a corresponding callback function API that will further process the reply.
- UPF configuration calculation and deployment: The UPF state transactions (respectively indicating state information of state replies) may go through the same distributed consensus protocol 103 (independent competition) process. For each accepted state transaction set, the indicated callback function on every SMF entity 100, 100' may be executed. Until all required state information (based on individual UPF replies) is received, corresponding UPF configuration (e.g. UPF_Cfg1) is calculated and emitted as an event (see e.g. FIG. 10) again.
- PDU_Rq deployment acknowledgement: when a deployment event is consumed, corresponding parameters (i.e. configurations prescribed) are deployed. This may be acknowledged by every UPF entity 200 along the path back to the distributed SMF system and the initial AMF entity 201, who submits the PDU_Rq1. Finally, the UE 202 is notified. After all UPF entities 200 finish, a PDU session channel is configured over the path as well.

In addition, several new components may also be introduced into the distributed SMF system, in particular an immutable SMF processing logic. In the distributed SMF system, the processing logic on every SMF entity 100, 100' may be immutable and transparent. In other words, every SMF entity 100, 100' may be required to behave identically as a single entity. In other words, the processing logic may be publicly shared among all SMF entities 100, 100' and whenever the logic is modified, the modification itself has to go through the same distributed consensus procedure 103 (as the interactions for PDU _Rqs), so that every other SMF entity 100, 100' either moves in the same way or does not move at all.

In the following, a full procedure starting from deploying the SMF entities 100, 100' across a set of distributed RE nodes, wherein the deployed processing logic of SMF entities 100, 100' is immutably decentralized, is highlighted. Given the decentralized SMF entities 100, 100', a decentralized session management will be described in detail thereafter.

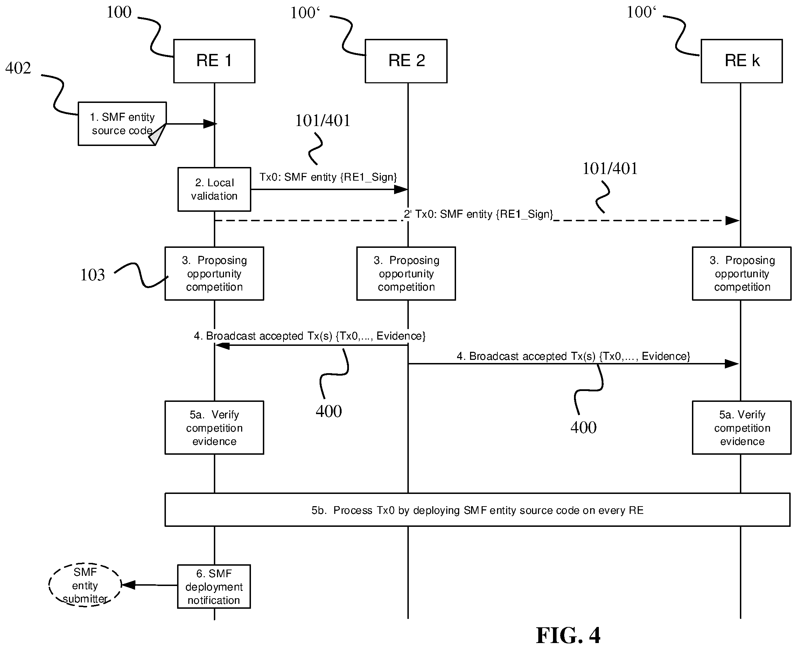

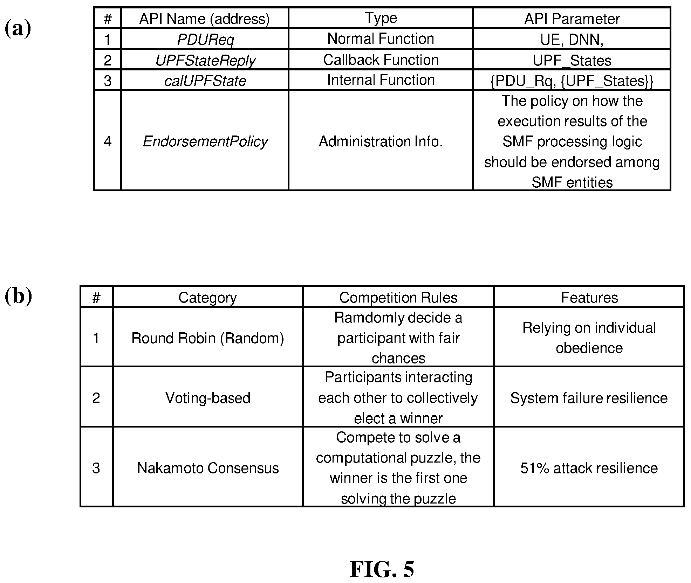

First, the SMF deployment procedure is described with respect to the FIGs. 4 and 5. This procedure finishes with deploying the SMF entities 100, 100' based on a set of distributed RE nodes with the same copy of the processing logic of a SMF entity. "SMF entity" and "the processing logic of the SMF entity" may be used interchangeably to simplify the discussion. The whole procedure is depicted in FIG. 4.
1. A SMF entity source code (not yet installed) is created and provided to an RE node (here "RE 1", i.e., the first entity 100). Such a SMF entity source code is a computer program that runs the processing logic of a SMF. In practice, this application program can be either an application software or an image of a micro-service virtual machine containing a SMF application.
   A SMF entity source code can contain meta-information, such as its version number (VER_ID), a checksum, and the signature of the submitter, which can be verified by the receiving RE 1. A SMF entity source code can be even encrypted when submitting to an RE, in order to secure during the transmission between the submitter and the RE 1. Notably, if an end to-end encryption is required, the submitter and the RE 1 may be configured with a security channel, which can rely on public key infrastructure where public keys are distributed in advance.
   A SMF entity source code may further define a set of APIs and their internal implementations (i.e. the actual processing logics). A list of possible APIs and additional information is shown in the table in FIG. 5a. The table specifies API names, types, and parameters.
   Notably, the endorsement policy in the table may define how the APIs should be executed among a set of SMF entities. In a general case, every SMF entity should repeat the execution of an API triggered by a transaction so that every SMF entity keeps moving in the same pattern so the view of the system is fully synchronized. However, there are some special cases where all member execution is not required (e.g. in a secure environment where the risk of malicious behaviors from individual SMF entity is low), so the endorsement policy can specify that only a certain portion of SMF entities have to execute the API while the rest only has to verify and commit the execution results.
2. RE 1 verifies the information and if passes, RE1 encapsulates the SMF entity source code as a SMF deployment transaction 401 (Tx0) with its own signature (RE1_Sign) and submits the composed SMF deployment transaction 401 that contains the SMF entity source code to adjacent RE nodes. The adjacent RE nodes are those RE nodes ("RE 2" ... "RE k") that are directly connected to the RE 1. The adjacent RE nodes propagate the SMF deployment transaction 401 further to their neighboring RE nodes.
3. While receiving the SMF deployment transaction 401 (or meanwhile other such Tx(s) if any), every RE node competes an opportunity of proposing a processing order for the received SMF deployment transactions (i.e., to propose a transaction set 110, 120?). There are many options where the competition can be done in different manners. Three possible ways are listed in the table shown in FIG. 5b. The table indicates the categories, competition rules, and features.
   The detailed interactions as well as the security level will be different, depending on the competition rules that are chosen. The random process may be the lightest competition scheme. For example, every participant can randomly generate a token integer (RE_Token) with a synchronized time spot, after that every participant compares its own token with others', the participant who generates either the largest or the least token wins; for those who generate the equal tokens, either smaller or greater RE_ID participant wins. This simple random competition has the weakest security level because the tokens could be fraudulent, thus difficult to prevent from malicious attacks. However, given a strong security assumption where every participant is benign, the random competition can be applied.
   The voting-based competitions involve multi-round interactions for a collective voting stage. Typical choices are distributed consensus protocols such as Paxos, Ripple and Rift. These will cause some overheads of signaling messages among participants. Comparing with a simple random mechanism, a voting-based competition offers a stronger security level where system failures can be prevented. However, for malicious behaviors, it could not be handled.
   The Nakamoto consensus is also known as proof-of-work (PoW) distributed consensus protocol widely used in blockchain systems - a distributed ledger technology. This competition does not involve frequent interactions among participants but heavy computational cost at local side. Specifically, a computational puzzle has to be solved individually. For example, in PoW, a nonce has to be found in order to make the whole hash value fulfill a pre-defined criterion, while no shortcut is possible except enumerating all possible solutions. Nakamoto consensus also achieves the highest security level where malicious behaviors can be prevented, given that 51% of participants are benign or not compromised.
   The common outcome of different competition models is a winner (entity) in one competition round, which is allowed to suggest an acceptedtransaction set to other entities.
4. The winning RE node (assuming RE 2 here in FIG. 4) broadcasts an accepted transaction set 400, i.e., a set of accepted SMF deployment transactions, including the evidence (EVD_RE2) for the previous competition. This evidence is verifiable so that every other RE node can be convinced of the legitimacy of the winning RE node.
   Notably, the evidence may be different case by case of the chosen competition method. For the random competition, it could be the pair of <RE_ID, RE_Token>; for the voting-based method, the evidence could be already disseminated during the voting stage, for the Nakamoto consensus, for Pow it could be the solution of the puzzle.
5. Every RE node receives the accepted transaction set 400 and starts to process every accept SMF deployment transaction 401.
   a. In this stage, since it is used to deploy the SMF entity source code and there is only one version of SMF entity source code submitted, the accepted transaction set 400 is just Tx0. Before that, the attached evidence may be checked in order to make sure the RE node indeed a winner entity.
   b. After that, if the evidence is asserted, the accepted transaction set 400 is verified against its signature and checksum. If also successfully asserted, the accepted transaction set 400 will be checked out and SMF entity source code encoded will be stored. Whether the source code of the SMF entity will be launched depends on the concrete implementation and running platform. Here we generally assume that the SMF entity is accessible. For example, if a certain API is called, an RE node is responsible for executing the corresponding code.
6. The RE node returns the submission result to the submitter to notify whether the SMF entity source code is successfully deployed. Whenever any error occurs during the previous steps, the result is a failed submission.
   Notably, the final result (if successfully deployed) is that the same copy of SMF entity source code is available on every RE node. Especially, immutability can be enforced if Nakamoto consensus is used during the competition procedure. The key reason is that the cost to win a competition is significant, therefore, whoever would like to maliciously compromise the SMF entity source code (e.g. modifying its processing logic) immediately loses its motivation and capability. For this reason, if without explicit notation, a Nakamoto consensus or the like is our preferred option for the distributed consensus. This distributed consensus is also utilized in the following PDU session request processing.

Each RE node, on which the SMF entity source code is deployed, becomes a SMF entity 100, 100'. It is noted that from now the description refers indifferently to a SMF entity 100, 100#, as the RE node that hosts a SMF entity.

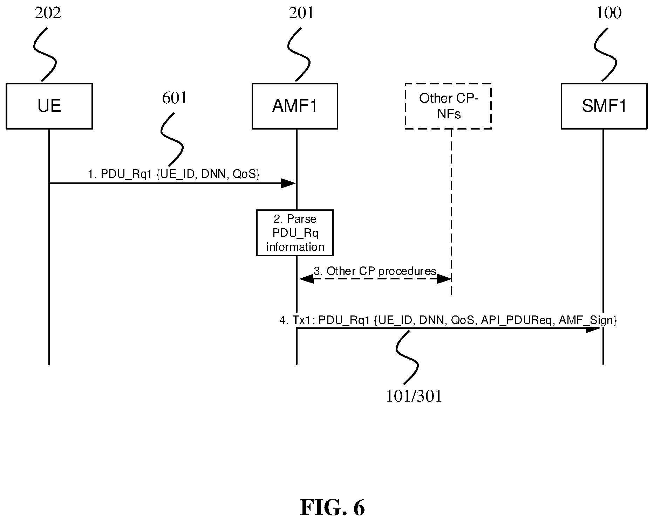

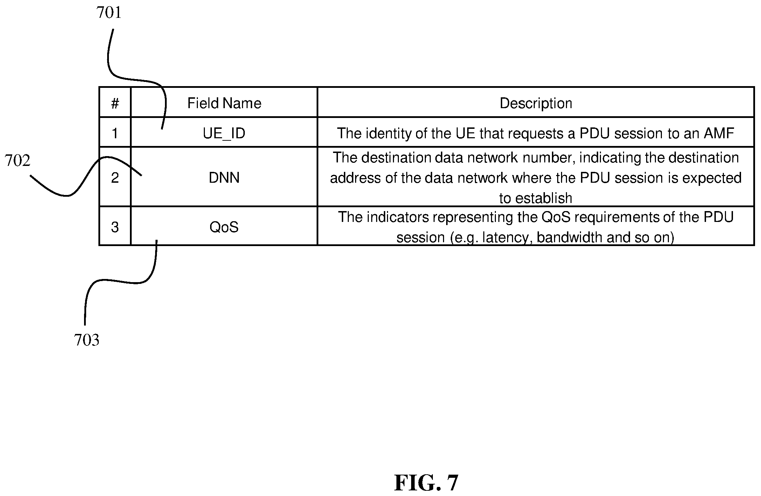

Next, a PDU session request submission procedure is described with respect to the FIGs. 6 and 7. A PDU session request (PDU_Rq) is a communication request that requires a communication channel from a UE 202 to a destination point, which is usually a gateway in a mobile network. In general, a PDU_Rq is created by a UE 202, sent to an AMF 201 by the UE 202, and then the AMF 201 submits the PDU_Rq to a SMF 100, 100'. The detailed interaction is shown in FIG. 6.
1. The UE 202 composes a PDU_Rq1 and sends it by accessing a wireless channel (RAN part) to its associated AMF 201 ("AMF1") of the RAN part. The PDU_Rq1 can include the parameters listed in table shown in FIG. 7. In particular, it may include at least one of a UE_ID 701, a DNN 702, and a QoS 703.
2. The AMF 201 parses the PDU_Rq1 from the received packet from the UE 202. The AMF 201 retrieves the UE_ID 701 and the DNN information 702.
3. The AMF 201 requests other CP-NFs (e.g. Unified Data Management (UDM) and Policy and Charging Rules Function (PCRF)) to check whether the UE 202 is allowed to access this service. This may invoke some necessary interactions and message exchanges with related NFs over service-based interfaces (SBI).
4. After this initial check is done, the AMF 201 starts to prepare PDU_Rq submission. With the PDU_Rq1 received from the UE 202, the AMF 201 composes a first transaction 101 that is a session transaction 301 ("Tx1"). The session transaction 301 includes the whole PDU_Rq1, and is signed with a signature of the AMF 201. This signed session transaction Tx1 is sent to an associated SMF entity 100 (a first SMF entity 100, "SMF1") that is assigned to be responsible for handling the session requests from the AMF 201.
   a. If the PDU_Rq1 is rejected, the AMF 201 can immediately reply to UE 202 that PDU_Rq1 is not accepted at the moment.

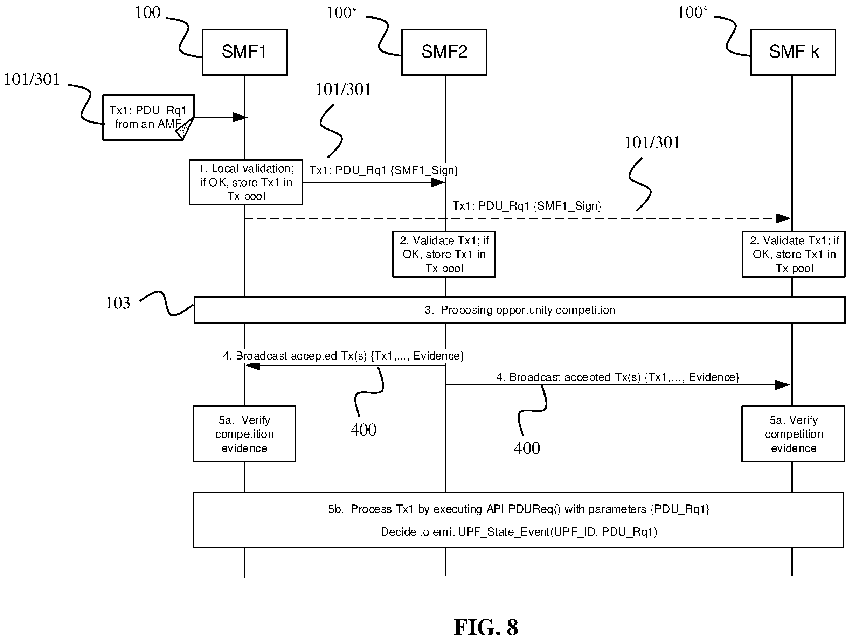

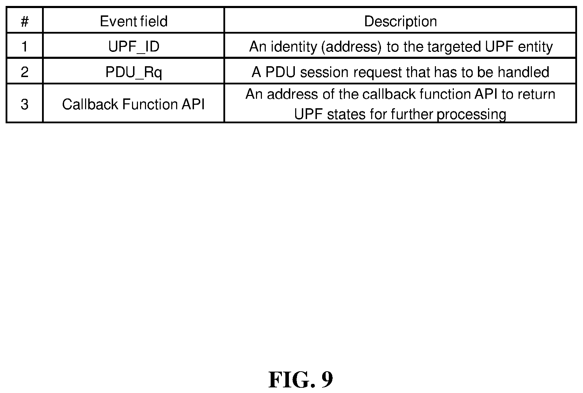

Next, a session request distributed consensus procedure is described in detail with respect to the FIGs. 8 and 9. This procedure is similar to the SMF entity deployment procedure described with respect to FIGs. 4 and 5, and follows up on FIGs 6 and 7.
1. The first transaction 101/session transaction 301 including the PDU session request (PDU_Rq1) is initially checked by the first SMF entity 100 ("SMF1").
   Specifically, the first SMF entity 100 validates the identity of the submitting AMF and the meta-information in the received session transaction 301 including the PDU_Rq1. The first SMF entity 100 first validates the signature of AMF 201 ("AMF 1", see FIG. 6), from which it received the session transaction 301. This requires that the first SMF entity 100 possesses the public key material of the AMF 201, which can be configured in advance by the operator or dynamically retrieved from the operator. After the verification succeeds, the first SMF entity 100 then validates the information contained in the table in FIG. 9, in order to determine whether the PDU_Rq1 comprised by the session transaction 301 is allowed to be further processed. The table includes event fields UPF_ID, PDU and Callback Function API, and includes a description.
   If allowed, the first SMF entity 100 further attaches the session transaction 301 (Tx1) with its signature information and forwards it to connected other SMF entities 100'. Otherwise, the first SMF entity 100 drops the session transaction 301 and replies to the AMF 201 that the PDU_Rq1 is not allowed. Notably, if E2E encryption is required, the first SMF entity 100 has to cipher the session transaction 301 with an encryption method that is specified by the operator. This can be built based on a shared key mechanism or a private-public key mechanism.
2. Every other SMF entity 100' (e.g., "SMF2") validates the received session transaction 301 (Tx1) against the information of the first SMF entity 100, which sent the session transaction 301 (i.e. "SMF 1" in the flowchart). The validation actions may include: the signature of the first SMF entity 100, the integrity of the session transaction 310 (Tx1) and deciphering the session transaction 301 (if encryption is applied). If this validation succeeds, every SMF entity 100, 100' ("SMF1", "SMF2", ... "SMF k") stores Tx1 into its transaction pool at local, and forwards the session transaction 301 (Tx1) to the connected SMF entities 100, 100' further. The transaction pool may temporarily store the session transactions Tx(s) that are not processed yet. Notably, if the session transaction 301 (Tx1) already exists in the local transaction pool, which can be repeatedly sent from other SMF entities 100', e.g. SMF2 discards it directly.
3. Another SMF entity 100' (e.g., SMF2) selects a set of transactions from its local transaction pool and proposes this second transaction set 120 to the distributed SMF system. Now it is the stage a distributed consensus has to be formed among all the SMF entities 100, 100'. Similar to the SMF entity deployment described above, there are many options to establish the distributed consensus, where the methods vary with different protocols under distinct levels of security models, which are listed in the table shown in FIG. 5b.
   Every SMF entity 100, 100' competes to win a chance to propose the transaction set 110, 120 prepared by itself. After the competition (depending on the concrete protocol chosen), one SMF entity 100, 100' will be entitled to propose its transaction set as an accepted transaction set 400.
   For example, if Nakamoto consensus is chosen, every SMF entity 100, 100' will locally calculate a solution for finding a nonce that solves a computational puzzle where the hash value of the whole Tx block with the nonce can satisfy a pre-define criterion. Note that any SMF entity 100, 100' could be a winner in a competition if that SMF entity 100, 100' wins the competition.
4. In this discussion, we assume that another SMF entity 100', namely SMF2, previously selects a second transaction set 120 and wins a competition so that this second transaction set 120 is successfully proposed for processing. The accepted transaction set 400 may be broadcast by SMF2, which will be received by e.g. SMF1 and every other SMF entities (e.g. SMF k).
5. The first SMF entity 100 processes each session transaction 101, 102, 301 in the accepted transaction set 400 broadcast from the winner SMF entity 100' (i.e. SMF2).
   a. The first SMF entity 100 first verifies the evidence attached with the accepted set, if passes, then;
   b. The first SMF entity 100 reads the transaction set body, and each session transaction, and invokes the associated API (the name of the API is listed in the table shown in FIG. 5a) at the address specified in the transaction set 400. As introduced before, the API corresponds to the deployed program on the SMF entity 100, 100' and it is the same on every SMF entity 100, 100'.
   Specifically, this API invocation takes the parameters that are read from session transactions in the accepted transaction set 400. These parameters can include the UE_ID 701, DNN_ID 702, and QoS information 703 shown in the table of FIG. 7. The API processing logic may use this information to decide from which UPF entities 200 current states have to be retrieved. The execution results of this API invocation will be a decision to emit one or multiple UPF state retrieval events. The fields of an UPF state retrieval event are listed in table shown in FIG. 9.

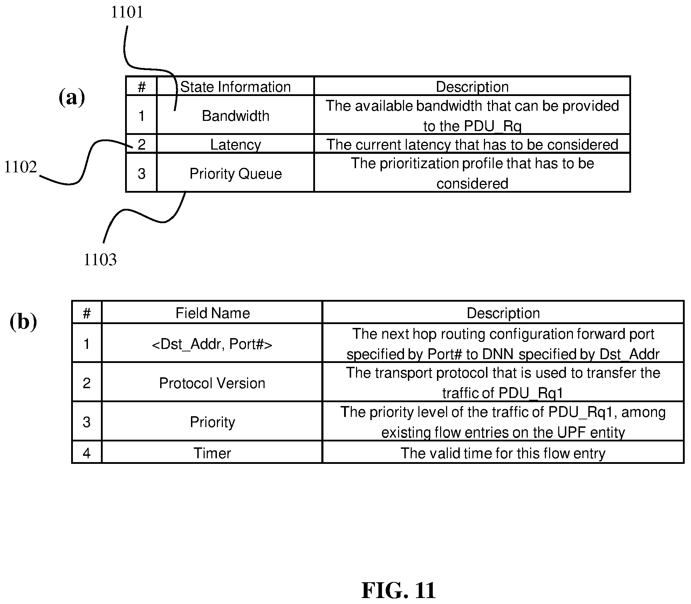

Next, a UPF state retrieval and reply procedure is described in detail with respect to FIGs. 10 and 11. State retrieval events will be sent from SMF entities 100, 100' to UPF entities 200. The events will be handled by the UPF entity 200 whose identity matches the UPF_ID field contained in the event, otherwise, the UPF entity 200 will drop those events whose UPF_ID field specified does not match. For the event whose UPF_ID matches the identity of the UPF entity, the detailed procedure is depicted in FGI. 10.
1. The SMF entities 100, 100's emit UPF state retrieval events 1000 to the UPF entities 200. It is worth to note that although the execution is repeated on every SMF entity 100, 100', however, it does not mean every SMF entity 100, 100' will emit the same events to UPF entities 200 repeatedly. For efficiency, only a required number of events will be actually issued from the distributed SMF system to UPF entities 200, which is governed by the rules defined by the administrator.
2. The UPFs 200 read the parameters in the events. For instance, UPF1 reads the parameters contained in Event1. The parameters mainly contain the requesting identity SMF entity (SMF1_ID), the DNN and QoS information for the PDU_Rq1 and the callback function reference point (address) containing the processing logic on SMF entity that will process the returned UPF1 states. The prepared states are the states that are relevant to PDU_Rq1, while irrelevant states does not have to be provided. In parallel, the UPF2 reads the parameters contained in Event2. Note that the callback function API (address) is the same where the returned UPF states will be processed at the SMF entity 100, 100'.
3. The UPF1 composes a first state transaction 1001 (Tx3) including information of a state reply message 1004 containing the prepared states (UPF1_States) and sends it back to the SMF entity (SMF1). In the first state transaction 1001, the UPF1 signs with its signature (UPF1_Sign). The destination address of the first state transaction 1001 shall be the callback function API (address) provided in the state retrieval event (Event3). Similarly, the UPF2 composes a second state transaction 1002 (Tx4) including information of a state reply message 1004 containing the prepare states (UPF2_States) and sends back to SMF entity (SMF2). In the second state transaction 1102 (Tx4), the UPF2 signs with its signature (UPF2_Sign). The destination address of the second state transaction 1002 shall be also the callback function API (address) provided in the state retrieval event (Event4). The parameters of the UPF states can include the information listed in table shown in FIG. 11a. The information may include a bandwidth 1101, latency 102, and/or priority queue 1103.
4. The SMF1 receives the first state transaction 1001 (Tx3) and does an initial check similar to the treatment on other Tx(s). For example, the signature of the UPF (UPF1_Sign) is verified, the integrity of the first state transaction 101/1001 is also checked. After all initial checks pass, the SMF1 adds the first state transaction 1002 (Tx3) into its transaction pool and forwards it to other SMF entities 100' like how Tx1 was handled. Similarly, the SMF2 also receives the second state transaction 1002 (Tx4) and follows the same procedure where initial checks are done, the SMF2 stores it into its transaction pool and forwards the second state transaction 102/1002 (Tx4) to other SMF entities 100, 100'.
5. A similar distributed consensus procedure 103 will be performed on Tx3 and Tx4 like how Tx1 was handled. The SMF entities 100, 100' will also compete to win a chance to propose a transaction set 110, 120 of state transactions 1001, 1002 selected from their own transaction pools (where Tx3 and Tx4 are stored). If Tx3 and Tx4 enter the transaction pools of some SMF entities 100, 100' and if any of them wins in a competition, they will be sooner or later selected and proposed to other SMF entities 100, 100'. Notably, Tx3 and Tx4 may be accepted at the same time if they are both selected by the same SMF entity 100, 100' who is the winning entity of the competition. If Tx3 and Tx4 are selected by different SMF entities 100, 100', Tx3 and Tx4 can be accepted sequentially and the order totally depends on which SMF entity 100, 100' would be the winner entity first.
   An outcome of a competition is considered, where Tx3 (Tx4) or both are accepted, possibly together with other state transactions if there is any. These accepted transactions form the accepted transaction set 400 and will be broadcast to every other SMF entities 100, 100'.
6. For a set of accepted Tx(s) (accepted transaction set 400) the evidence of the SMF entity 100, 100', which claims to be the winner entity is verified. If the verification succeeds, for each state transaction (Tx3 or Tx4), the associated callback function API (address) will be triggered, with the arguments retrieved from Tx3 (Tx4). These arguments can be the PDU_Rq1 information and the returned UPF states (UPF1/2_States).
7. The callback function API UPFStateReply() in the table illustrated in FIG. 5a takes the UPF states and checks whether all necessary UPF states are available for calculating a full session configuration 300 for the PDU_Rq1. If the states of some UPF states are not available yet, the callback function will temporarily store the provided UPF states under its address and wait for other states. Otherwise, the callback function calculates the full configurations for each UPF entity based on the received states.
   For example, if only UPF1_States are received when processing Tx3 (while Tx4 is not processed yet), the conditions check in the processing logic of the callback function will realize that for PDU_Rq1, UPF2_States are required while not yet come. Therefore, UPF 1_States will be first stored and after Tx4 are processed (therefore the same callback function is called), together with UPF1_States saved in the last processing, further executions will continue. This will calculate a full session 300 configuration for both UPF1 and UPF2, particularly, for all UPF entities 200 required.
   Possibly, a PDU_Rq abortion may happen at this moment. A possible reason could be that according to the returned UPF states (UPF1 and UPF2), PDU_Rq1 cannot be deployed due to for example the shortage of the resources on UPF entities 200 and/or the rules on any UPF entity 200 do not permit such a PDU request. If this case happens, the execution result of the callback function will be a rejection to PDU_Rq1, and the following configuration calculation for UPF entities 200 will be skipped and the result of rejection will be also realized by the SMF entity 100, 100', which is the original submitter of that PDU_Rq (i.e. SMF1 in our example).
   The outcomes of a full execution of the callback function are a set of UPF configuration events (i.e. UPF1/2_CFG_Event), which will be emitted in the same way as the UPF state retrieval events in the previous step.
8. UPF_Cfg_Events (Event5 and Event 6) will be emitted and received by each UPF entity 200. That is, the SMF entities 100, 100' provide the session configurations 300 to the UPF entities 200. Similarly, an UPF entity 200 only captures the events that address to its own. Specifically, the destination UPF identity is checked, if UPF_ID in an event corresponds to the own identity of an UPF entity, the event will be captured and further processed. The event mainly deploys a forwarding rule/flow entry that will route the traffic of PDU_Rq1 later. The configurations of the flow entry can contain (but not limited to) the parameters listed in table shown in FIG. 11b.
9. Those parameters will be applied to the UPF entity 200. For example, for UPF1, it configures the interface accessing to the RAN part so that the data plane traffic of PDU_Rq1 will be received and forwarded. Furthermore, UPF1 will also apply the parameters over the interface(s) accessing to other UPF entities 200, in order to further send the traffic of PDU_Rq1. In addition, if the session configurations 300 contain parameters related to the QoS guarantee of PDU_Rq1, UPF1 will also apply. Similarly, other UPF entities 200 such as UPF2 will follow the same way to consume the session configurations 300 prescribed for deploying PDU_Rq1. For example, UPF2 will apply the parameters over the interface(s) connecting to UPF1 as well as interface(s) for the following hops such as to the gateway nodes. Also, the QoS guarantee for PDU_Rq1 will be applied if any.
   Notably, the session configurations 300 will be consistent because they are calculated based on the provided UPF states in the last step. More importantly, before this set of configurations, the states of every UPF are not modified. In other words, UPF entities 200 are configured only after a consensus is agreed among all SMF entities 100, 100'. In general, all SMF entities 100, 100' move forward with the same processing logic and states of UPF entities 200. Therefore the prescribed session configurations 300 of every UPF entities 200 are the same thus no conflict.
   After the session configurations 300 are applied, every UPF entity 200 acknowledges the SMF entity 100, 100' by submitting also a Tx indicating the PDU session deployment result, which may contain the access information where the AMF and UE will need to eventually access the deployed PDU session channel.

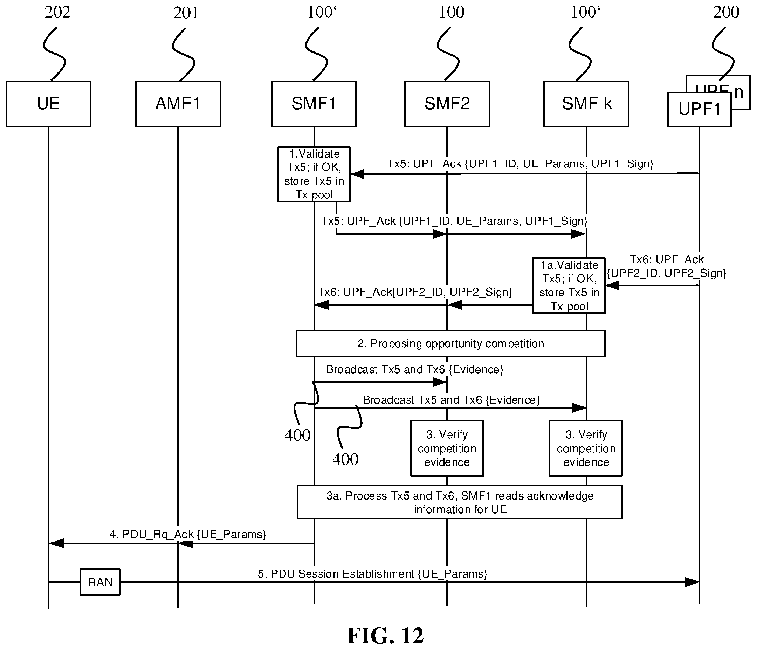

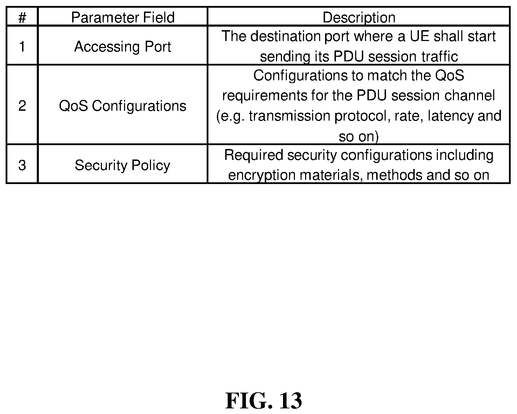

Next, a session request acknowledgement is described in detail with respect to the FIGs. 12 and 13. This procedure only considers the successful case where the session configurations 300 for deploying a PDU_Rq (i.e. PDU_Rq1) are applied on UPF entities 200. For the abortion case where the PDU_Rq is not successfully deployed, it follows as described above.

The acknowledgement Tx(s) (Tx5 and Tx6 from UPF1 and UPF2 respectively) follows the same way of any Tx in the previous steps being handled. The interactions can be seen in FIG. 12.
1. The first SMF entity 100 (SMF1) receives and validates Tx5. SMF1 validates the signature of UPF1 and the integrity of the Tx5. If the local validation passes, Tx5 will be stored into the transaction pool of SMF1, meanwhile Tx5 will be forwarded to other SMF entities 100' connected with SMF1. Similarly, SMF2 receives and validates Tx6. If the local validation passes, SMF2 validates the signature of UPF2 and the integrity of the Tx6. If the local validation passes, Tx6 will be stored into the transaction pool of SMF2, meanwhile Tx6 will be forwarded to SMF entities 100, 100' connected with SMF2;
   The parameters for UE 202 to access the deployed PDU session channel can include the information listed in table shown in FIG. 13. The table may indicate an accessing port, one or more QoS configurations, and/or a security policy.
2. Similar to the previous distributed consensus procedure, every SMF entity 100, 100' competes to win an opportunity for proposing an accepted transaction set 400. The competition rule depends on the consensus protocol that is chosen, which can be an option from table shown in FIG. 5b.
   The result of a competition is that a winner SMF entity 100, 100' will propose an accepted transaction set 400. This assumes that SMF1 wins the competition and includes Tx5/Tx6 or both into the set of accepted transaction set 400. The accepted transaction set 400 will be broadcast to every other SMF entities 100, 100' together with the evidence that can prove SMF1 being the winner entity.
3. A SMF entity 100, 100' receives an accepted transaction set 400 and processes the Tx(s) contained in the set 400. First of all, a SMF (SMF2) will verify whether the evidence proves that the proposing SMF entity (SMF1) is indeed a winner entity. If the evidence works, SMF2 starts to process the accepted Tx(s) (i.e. Tx5 or Tx6) sequentially. Since SMF2 does not have to acknowledge back to the AMF (AMF1) who initially submitted the PDU_Rq1, the SMF2 only commits the processed Tx(s) into the local storage;
   However, since SMF1 will also process the set of accepted Tx(s), which is proposed by itself, SMF1 reads the acknowledgement Tx(s) (Tx5 and Tx6). SMF1 will reply the one that is required by the AMF1 (so as UE) to AMF1.
4. AMF1 will further respond the information that is required for UE 202 to start its PDU session requested in PDU_Rq1 to the UE 202.
5. The UE 202 uses the information contained in the acknowledgement packet from AMF1 and starts the PDU session according to the configuration indicated in the acknowledgement from AMF1.

The following embodiment is not encompassed by the wording of the claims but is considered as useful for understanding the invention.

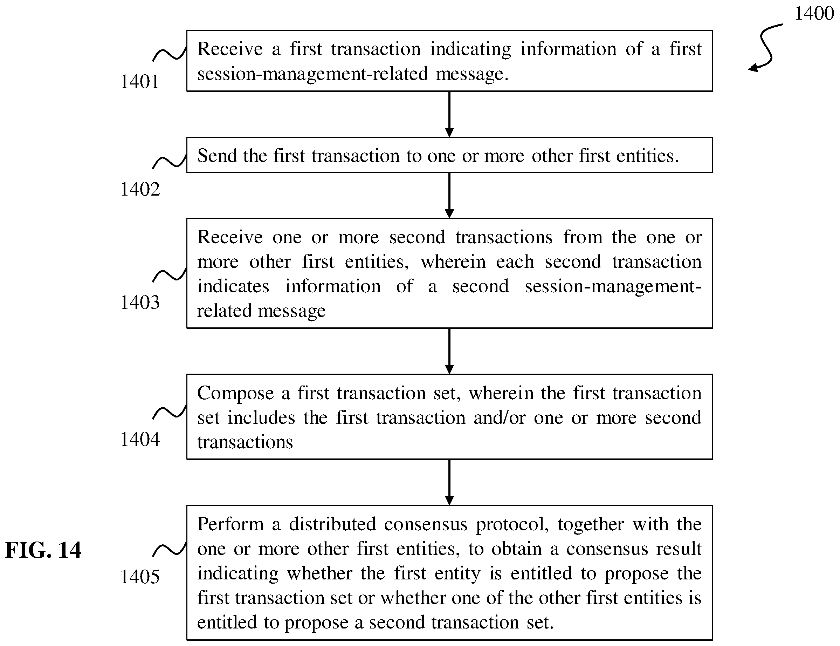

FIG. 14 shows a method 1400 according to an embodiment of this disclosure. The method 1400 may be performed by the first entity 100, particularly SMF entity 100, shown in the previous figures. However, it may also be performed by any one of the other first entities 100', i.e. other SMF entities 100'. The method 1400 is for decentralized session management.

The method 1400 comprises a step 1401 of receiving a first transaction 101 indicating information of a first session-management-related message, e.g., 402, or 601, or 1003. Further, the method 1400 comprises a step 1402 of sending the first transaction 101 to one or more other first entities 100'. Then, it comprises a step 1403 of receiving one or more second transactions 102 from the one or more other first entities 100', wherein each second transaction 102 indicates information of a second session-management-related message 1004. The method next comprises a step 1404 of composing a first transaction set 110, wherein the first transaction set 110 includes the first transaction 101 and/or one or more second transactions 102. Then, the method 1400 comprises a step 1405 of performing a distributed consensus protocol 103, together with the one or more other first entities 100', to obtain a consensus result indicating whether the first entity 100 is entitled to propose the first transaction set 110 or whether one of the other first entities 100' is entitled to propose a second transaction set 120.

The present disclosure and its embodiments aim to eliminate a centralized entity that may impose limitations discussed above. With the proposed embodiments, distributed SMF entities 100, 100' are purely equal peers and collectively form a distributed SMF system where any decision on processing e.g. a PDU session request is made based on distributed consensus protocol 103 and result. The architecture of the distributed SMF system is fully compatible with existing 3GPP architectures, where some new interactions and parameters may be introduced over existing interfaces. The present disclosure has been described in conjunction with various embodiments as examples as well as implementations. However, other variations can be understood and effected by those persons skilled in the art and practicing the claimed subject matter, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims.

## Claims

1. A first entity (100) for decentralized session management, the first entity (100) being configured to:
receive a first transaction (101) indicating information of a first session-management-related message (402, 601, 1003);
send the first transaction (101) to one or more other first entities (100');
receive one or more second transactions (102) from the one or more other first entities (100'), wherein each second transaction (102) indicates information of a second session-management-related message (1004); and
compose a first transaction set (110), wherein the first transaction set (110) includes the first transaction (101) and/or one or more second transactions (102);
wherein the first entity (100) is **characterized by** being further configured to:
perform a distributed consensus protocol (103), together with the one or more other first entities (100'), to obtain a consensus result indicating whether the first entity (100) is entitled to propose the first transaction set (110) or whether one of the other first entities (100') is entitled to propose a second transaction set (120),
wherein performing the distributed consensus protocol (103) comprises determining a winner first entity among the first entity (100) and the one or more other first entities (100'), wherein the winner first entity is entitled to propose its first transaction set (110) or second transaction set (120), respectively,
wherein, if the consensus result indicates that the first entity (100) is entitled to propose the first transaction set (110), the first entity (100) is configured to:
send the first transaction set (110) together with a verifiable evidence of the consensus result as an accepted transaction set (400) to the one or more other first entities (100'),
wherein, if the consensus result indicates that the first entity (100) is not entitled to propose the first transaction set (110) and/or that one of the other first entities (100') is entitled to propose the second transaction set (120), the first entity (100) is configured to:
discard the first transaction set (110) and receive the second transaction set (120) as an accepted transaction set (400) from the other first entity (100').

2. The first entity (100) according to claim 1, wherein:
the first transaction (101) is a first session transaction (301) indicating information of a first session request message (601), and each second transaction (102) is a second session transaction indicating information of a second session request message.

3. The first entity (100) according to claim 2, wherein the information indicated by the first session transaction (101, 301) and/or by any one of the second session transactions (102) comprises at least one of:
- an identification, ID, (701) of a user equipment, UE, (202) which is the source of the first session request message (601) or respectively of the second session request message;
- an ID of an access and mobility management function, AMF, (201) which is the source of the first session transaction (101, 301) or respectively of the second session transaction (102);
- a data network number, DNN, (702) of the data network (204) to which the first session request message (601) or respectively the second session request message relates;
- a quality of services, QoS, (703) requested by the first session request message (601) or respectively by the second session request message;
- authentication information.

4. The first entity (100) according to claim 3, further configured to:
validate the first session transaction (101, 301) before sending it to the one or more other first entities (100'), and/or validate the one more second session transactions (102) after receiving them from the one or more other first entities (100'), based on the authentication information.

5. The first entity (100) according to one of the claims 2 to 4, when depending on claim 2 or 3, further configured to:
determine, based on every session transaction (101, 102) included **in** the accepted transaction set (400), one or more second entities (200) from which state information is to be requested.

6. The first entity (100) according to claim 5, further configured to, before determining the one or more second entities (200) from which state information is to be requested:
validate the accepted transaction set (400) based on verifiable evidence of the consensus result received from the other first entity (100').

7. The first entity (100) according to claim 5 or 6, further configured to:
send a state retrieval message (1000) to one or more second entities (200); and
receive a state reply message (1003) from each of the one or more second entities (200) **in** response to the respective state retrieval message (1000).

8. The first entity (100) according to claim 1, wherein:
the first transaction (101) is a first state transaction (1001) indicating state information of a first state reply message (1003) from a second entity (200), and each second transaction (102) is a second state transaction (1002) indicating state information of a second state reply message (1004) from a further second entity (200).

9. The first entity (100) according to claim 8, wherein the state information indicated by the first state reply message (1003) and/or by any one of the second reply messages (1004) comprises at least one of:
- an available bandwidth (1101);
- a latency (1102);
- a priority queue (1103).

10. The first entity (100) according to claim 8 or 9, further configured to:
validate the accepted transaction set (400) based on verifiable evidence of the consensus result received from the other first entity (100');
determine, based on every state transaction (1001, 1002) included in the accepted transaction set (400), whether the state information indicated by the accepted transaction set (400) is sufficient to calculate a session configuration (300) for each corresponding second entity (200);
if the state information is sufficient, calculate the session configurations (300) for the corresponding second entities (200); and
if the state information is not sufficient, wait for receiving further state information indicated by other accepted transaction sets (400), until all the state information is sufficient to calculate the session configurations (300) for the corresponding second entities (200).

11. A method (1400) for decentralized session management, the method (1400) comprising:
receiving (1401) a first transaction (101) indicating information of a first session-management-related message (402, 601, 1003);
sending (1402) the first transaction (101) to one or more other first entities (100');
receiving (1403) one or more second transactions (102) from the one or more other first entities (100'), wherein each second transaction (102) indicates information of a second session-management-related message (1004); and
composing (1404) a first transaction set (110), wherein the first transaction set (110) includes the first transaction (101) and/or one or more second transactions (102);
wherein the method (1400) is **characterized by** further comprising:
performing (1405) a distributed consensus protocol (103), together with the one or more other first entities (100'), to obtain a consensus result indicating whether the first entity (100) is entitled to propose the first transaction set (110) or whether one of the other first entities (100') is entitled to propose a second transaction set (120)
wherein performing the distributed consensus protocol (103) comprises determining a winner first entity among the first entity (100) and the one or more other first entities (100'), wherein the winner first entity is entitled to propose its first transaction set (110) or second transaction set (120), respectively,
wherein, if the consensus result indicates that the first entity (100) is entitled to propose the first transaction set (110), the method (1400) comprises:
sending the first transaction set (110) together with a verifiable evidence of the consensus result as an accepted transaction set (400) to the one or more other first entities (100'),
wherein, if the consensus result indicates that the first entity (100) is not entitled to propose the first transaction set (110) and/or that one of the other first entities (100') is entitled to propose the second transaction set (120), the method (1400) comprises:
discarding the first transaction set (110) and receive the second transaction set (120) as an accepted transaction set (400) from the other first entity (100').

12. Computer program comprising a program code for performing the method (1400) according to claim 11, when executed on a computer.

## Patentansprüche

1. Erste Entität (100) für eine dezentralisierte Sitzungsverwaltung, wobei die erste Entität (100) zu Folgendem konfiguriert ist:
Empfangen einer ersten Transaktion (101), die Informationen einer ersten sitzungsverwaltungsbezogenen Nachricht (402, 601, 1003) angibt;
Senden der ersten Transaktion (101) an eine oder mehrere andere erste Entitäten (100');
Empfangen einer oder mehrerer zweiter Transaktionen (102) von der einen oder den mehreren anderen ersten Entitäten (100'), wobei jede zweite Transaktion (102) Informationen einer zweiten sitzungsverwaltungsbezogenen Nachricht (1004) angibt; und Zusammenstellen eines ersten Transaktionssatzes (110), wobei der erste Transaktionssatz (110) die erste Transaktion (101) und/oder eine oder mehrere zweite Transaktionen (102) beinhaltet;
wobei die erste Entität (100) **dadurch gekennzeichnet ist, dass** sie ferner zu Folgendem konfiguriert ist:
Durchführen eines verteilten Konsensprotokolls (103) zusammen mit der einen oder den mehreren anderen ersten Entitäten (100'), um ein Konsensergebnis zu erlangen, das angibt, ob die erste Entität (100) berechtigt ist, den ersten Transaktionssatz (110) vorzuschlagen, oder ob eine der anderen ersten Entitäten (100') berechtigt ist, einen zweiten Transaktionssatz (120) vorzuschlagen,
wobei das Durchführen des verteilten Konsensprotokolls (103) Bestimmen einer gewinnenden ersten Entität unter der ersten Entität (100) und der einen oder den mehreren anderen ersten Entitäten (100') umfasst, wobei die gewinnende erste Entität berechtigt ist, ihren ersten Transaktionssatz (110) bzw. ihren zweiten Transaktionssatz (120) vorzuschlagen,
wobei, wenn das Konsensergebnis angibt, dass die erste Entität (100) berechtigt ist, den ersten Transaktionssatz (110) vorzuschlagen, die erste Entität (100) zu Folgendem konfiguriert ist:
Senden des ersten Transaktionssatzes (110) zusammen mit einem überprüfbaren Nachweis des Konsensergebnisses als einen akzeptierten Transaktionssatz (400) an die eine oder die mehreren anderen ersten Entitäten (100'),
wobei, wenn das Konsensergebnis angibt, dass die erste Entität (100) nicht berechtigt ist, den ersten Transaktionssatz (110) vorzuschlagen und/oder dass eine der anderen ersten Entitäten (100') berechtigt ist, den zweiten Transaktionssatz (120) vorzuschlagen, die erste Entität (100) zu Folgendem konfiguriert ist:
Verwerfen des ersten Transaktionssatzes (110) und Empfangen des zweiten Transaktionssatzes (120) als einen akzeptierten Transaktionssatz (400) von der anderen ersten Entität (100').

2. Erste Entität (100) nach Anspruch 1, wobei:
die erste Transaktion (101) eine erste Sitzungstransaktion (301) ist, die Informationen einer ersten Sitzungsanforderungsnachricht (601) angibt, und jede zweite Transaktion (102) eine zweite Sitzungstransaktion ist, die Informationen einer zweiten Sitzungsanforderungsnachricht angibt.

3. Erste Entität (100) nach Anspruch 2, wobei die Informationen, die durch die erste Sitzungstransaktion (101, 301) und/oder durch eine beliebige der zweiten Sitzungstransaktionen (102) angegeben werden, mindestens eine der Folgenden umfassen:
eine Kennung, ID, (701) einer Benutzerausrüstung, UE, (202), welche die Quelle der ersten Sitzungsanforderungsnachricht (601) bzw. der zweiten Sitzungsanforderungsnachricht ist;
eine ID einer Zugriffs- und Mobilitätsverwaltungsfunktion, AMF, (201), welche die Quelle der ersten Sitzungstransaktion (101, 301) bzw. der zweiten Sitzungstransaktion (102) ist;
eine Datennetzwerknummer, DNN, (702) des Datennetzwerks (204), auf die sich die erste Sitzungsanforderungsnachricht (601) bzw. die zweite Sitzungsanforderungsnachricht bezieht;
eine Dienstqualität, QoS, (703), die durch die erste Sitzungsanforderungsnachricht (601) bzw. durch die zweite Sitzungsanforderungsnachricht angefordert wird;
Authentifizierungsinformationen.

4. Erste Entität (100) nach Anspruch 3, die ferner zu Folgendem konfiguriert ist:
Validieren der ersten Sitzungstransaktion (101, 301) vor deren Senden an die eine oder die mehreren anderen ersten Entitäten (100') und/oder Validieren der einen oder der mehreren zweiten Sitzungstransaktionen (102) nach deren Empfangen von der einen oder den mehreren anderen ersten Entitäten (100') basierend auf den Authentifizierungsinformationen.

5. Erste Entität (100) nach einem der Ansprüche 2 bis 4, sofern dieser von Anspruch 2 oder 3 abhängig ist, die ferner zu Folgendem konfiguriert ist:
Bestimmen, basierend auf jeder Sitzungstransaktion (101, 102), die in dem akzeptierten Transaktionssatz (400) beinhaltet ist, einer oder mehrerer zweiter Entitäten (200), von denen Statusinformationen anzufordern sind.

6. Erste Entität (100) nach Anspruch 5, die vor dem Bestimmen der einen oder der mehreren zweiten Entitäten (200), von denen Statusinformationen anzufordern sind, ferner zu Folgendem konfiguriert ist:
Validieren des akzeptierten Transaktionssatzes (400) basierend auf überprüfbaren Nachweisen des Konsensergebnisses, das von der anderen ersten Entität (100') empfangen wurde.

7. Erste Entität (100) nach Anspruch 5 oder 6, die ferner zu Folgendem konfiguriert ist:
Senden einer Statusabrufnachricht (1000) an eine oder mehrere zweite Entitäten (200); und
Empfangen einer Statusantwortnachricht (1003) von jeder der einen oder der mehreren zweiten Entitäten (200) als Reaktion auf die jeweilige Statusabrufnachricht (1000).

8. Erste Entität (100) nach Anspruch 1, wobei:
die erste Transaktion (101) eine erste Statustransaktion (1001) ist, die Statusinformationen einer ersten Statusantwortnachricht (1003) von einer zweiten Entität (200) angibt, und jede zweite Transaktion (102) eine zweite Statustransaktion (1002) ist, die Statusinformationen einer zweiten Statusantwortnachricht (1004) von einer weiteren zweiten Entität (200) angibt.

9. Erste Entität (100) nach Anspruch 8, wobei die Statusinformationen, die durch die erste Statusantwortnachricht (1003) und/oder durch eine beliebige der zweiten Antwortnachrichten (1004) angegeben werden, mindestens eine der Folgenden umfassen:
eine verfügbare Bandbreite (1101);
eine Latenz (1102);
eine Prioritätswarteschlange (1103).

10. Erste Entität (100) nach Anspruch 8 oder 9, die ferner zu Folgendem konfiguriert ist:
Validieren des akzeptierten Transaktionssatzes (400) basierend auf überprüfbaren Nachweisen des Konsensergebnisses, das von der anderen ersten Entität (100') empfangen wurde;
Bestimmen, basierend auf jeder Statustransaktion (1001, 1002), die in dem akzeptierten Transaktionssatz (400) beinhaltet ist, ob die Statusinformationen, die durch den akzeptierten Transaktionssatz (400) angegeben werden, ausreichend sind, um eine Sitzungskonfiguration (300) für jede entsprechende zweite Entität (200) zu berechnen;
wenn die Statusinformationen ausreichend sind, Berechnen der Sitzungskonfigurationen (300) für die entsprechenden zweiten Entitäten (200); und
wenn die Statusinformationen nicht ausreichend sind, Warten auf Empfangen weiterer Statusinformationen, die durch andere akzeptierte Transaktionssätze (400) angegeben werden, bis alle Statusinformationen ausreichend sind, um die Sitzungskonfigurationen (300) für die entsprechenden zweiten Entitäten (200) zu berechnen.

11. Verfahren (1400) zur dezentralisierten Sitzungsverwaltung, wobei das Verfahren (1400) Folgendes umfasst:
Empfangen (1401) einer ersten Transaktion (101), die Informationen einer ersten sitzungsverwaltungsbezogenen Nachricht (402, 601, 1003) angibt;
Senden (1402) der ersten Transaktion (101) an eine oder mehrere andere erste Entitäten (100');
Empfangen (1403) einer oder mehrerer zweiter Transaktionen (102) von der einen oder den mehreren anderen ersten Entitäten (100'), wobei jede zweite Transaktion (102) Informationen einer zweiten sitzungsverwaltungsbezogenen Nachricht (1004) angibt; und
Zusammenstellen (1404) eines ersten Transaktionssatzes (110), wobei der erste Transaktionssatz (110) die erste Transaktion (101) und/oder eine oder mehrere zweite Transaktionen (102) beinhaltet;
wobei das Verfahren (1400) **dadurch gekennzeichnet ist, dass** es ferner Folgendes umfasst:
Durchführen (1405) eines verteilten Konsensprotokolls (103) zusammen mit der einen oder den mehreren anderen ersten Entitäten (100'), um ein Konsensergebnis zu erlangen, das angibt, ob die erste Entität (100) berechtigt ist, den ersten Transaktionssatz (110) vorzuschlagen, oder ob eine der anderen ersten Entitäten (100') berechtigt ist, einen zweiten Transaktionssatz (120) vorzuschlagen
wobei das Durchführen des verteilten Konsensprotokolls (103) Bestimmen einer gewinnenden ersten Entität unter der ersten Entität (100) und der einen oder den mehreren anderen ersten Entitäten (100') umfasst, wobei die gewinnende erste Entität berechtigt ist, ihren ersten Transaktionssatz (110) bzw. ihren zweiten Transaktionssatz (120) vorzuschlagen,
wobei, wenn das Konsensergebnis angibt, dass die erste Entität (100) berechtigt ist, den ersten Transaktionssatz (110) vorzuschlagen, das Verfahren (1400) Folgendes umfasst:
Senden des ersten Transaktionssatzes (110) zusammen mit einem überprüfbaren Nachweis des Konsensergebnisses als einen akzeptierten Transaktionssatz (400) an die eine oder die mehreren anderen ersten Entitäten (100'),
wobei, wenn das Konsensergebnis angibt, dass die erste Entität (100) nicht berechtigt ist, den ersten Transaktionssatz (110) vorzuschlagen und/oder dass eine der anderen ersten Entitäten (100') berechtigt ist, den zweiten Transaktionssatz (120) vorzuschlagen, das Verfahren (1400) Folgendes umfasst:
Verwerfen des ersten Transaktionssatzes (110) und Empfangen des zweiten Transaktionssatzes (120) als einen akzeptierten Transaktionssatz (400) von der anderen ersten Entität (100').

12. Computerprogramm, umfassend einen Programmcode zum Durchführen des Verfahrens (1400) nach Anspruch 11, wenn es auf einem Computer ausgeführt wird.

## Revendications

1. Première entité (100) de gestion de session décentralisée, la première entité (100) étant configurée pour :
recevoir une première transaction (101) indiquant des informations d'un premier message lié à la gestion de session (402, 601, 1003) ;
envoyer la première transaction (101) à une ou plusieurs autres premières entités (100') ;
recevoir une ou plusieurs secondes transactions (102) provenant d'une ou plusieurs autres premières entités (100'), dans laquelle chaque seconde transaction (102) indique des informations d'un second message lié à la gestion de session (1004) ; et
composer un premier ensemble de transactions (110), dans laquelle le premier ensemble de transactions (110) comporte la première transaction (101) et/ou une ou plusieurs secondes transactions (102) ;
dans laquelle la première entité (100) est **caractérisée en ce qu'**elle est également configurée pour :
réaliser un protocole de consensus distribué (103), conjointement avec l'une ou plusieurs autres premières entités (100'), pour obtenir un résultat de consensus indiquant si la première entité (100) est autorisée à proposer le premier ensemble de transactions (110) ou si l'une des autres premières entités (100') est autorisée à proposer un second ensemble de transactions (120),
dans laquelle la réalisation du protocole de consensus distribué (103) comprend la détermination d'une première entité gagnante parmi la première entité (100) et l'une ou plusieurs autres premières entités (100'), dans laquelle la première entité gagnante est autorisée à proposer son premier ensemble de transactions (110) ou son second ensemble de transactions (120), respectivement,
dans laquelle, si le résultat du consensus indique que la première entité (100) est autorisée à proposer le premier ensemble de transactions (110), la première entité (100) est configurée pour :
envoyer le premier ensemble de transactions (110) accompagné d'une preuve vérifiable du résultat du consensus en tant qu'ensemble de transactions acceptées (400) à une ou plusieurs autres premières entités (100'),
dans laquelle, si le résultat du consensus indique que la première entité (100) n'est pas autorisée à proposer le premier ensemble de transactions (110) et/ou que l'une des premières autres entités (100') est autorisée à proposer le second ensemble de transactions (120), la première entité (100) est configurée pour :
rejeter le premier ensemble de transactions (110) et recevoir le second ensemble de transactions (120) en tant qu'ensemble de transactions acceptées (400) de l'autre première entité (100').

2. Première entité (100) selon la revendication 1, dans laquelle :
la première transaction (101) est une première transaction de session (301) indiquant des informations d'un premier message de demande de session (601), et chaque seconde transaction (102) est une seconde transaction de session indiquant des informations d'un second message de demande de session.

3. Première entité (100) selon la revendication 2, dans laquelle les informations indiquées par la première transaction de session (101, 301) et/ou par l'une quelconque des secondes transactions de session (102) comprennent au moins l'un des éléments suivants :
- une identification, ID, (701) d'un équipement utilisateur, UE, (202) qui est la source du premier message de demande de session (601) ou respectivement du second message de demande de session ;
- une ID d'une fonction de gestion d'accès et de mobilité, AMF, (201) qui est la source de la première transaction de session (101, 301) ou respectivement de la seconde transaction de session (102) ;
- un numéro de réseau de données, DNN, (702) du réseau de données (204) auquel se rapporte le premier message de demande de session (601) ou respectivement le second message de demande de session ;
- une qualité de services, QoS, (703) demandée par le premier message de demande de session (601) ou respectivement par le second message de demande de session ;
- informations d'authentification.

4. Première entité (100) selon la revendication 3, configurée également pour :
valider la première transaction de session (101, 301) avant de l'envoyer à une ou plusieurs autres premières entités (100'), et/ou valider l'une ou plusieurs secondes transactions de session (102) après les avoir reçues de l'une ou plusieurs autres premières entités (100'), sur la base des informations d'authentification.

5. Première entité (100) selon l'une des revendications 2 à 4, lorsqu'elles dépendent de la revendication 2 ou 3, configurée également pour :
déterminer, sur la base de chaque transaction de session (101, 102) incluse dans l'ensemble de transactions acceptées (400), une ou plusieurs secondes entités (200) auprès desquelles des informations d'état doivent être demandées.

6. Première entité (100) selon la revendication 5, configurée également pour, avant de déterminer l'une ou plusieurs secondes entités (200) auprès desquelles des informations d'état doivent être demandées :
valider l'ensemble de transactions acceptées (400) sur la base de preuves vérifiables du résultat de consensus reçu de l'autre première entité (100').

7. Première entité (100) selon la revendication 5 ou 6, configurée également pour :
envoyer un message de récupération d'état (1000) à une ou plusieurs secondes entités (200) ; et
recevoir un message de réponse d'état (1003) de chacune des une ou plusieurs secondes entités (200) en réponse au message de récupération d'état respectif (1000).

8. Première entité (100) selon la revendication 1, dans laquelle :
la première transaction (101) est une première transaction d'état (1001) indiquant des informations d'état d'un premier message de réponse d'état (1003) provenant d'une seconde entité (200), et chaque seconde transaction (102) est une seconde transaction d'état (1002) indiquant des informations d'état d'un second message de réponse d'état (1004) provenant d'une autre seconde entité (200).

9. Première entité (100) selon la revendication 8, dans laquelle les informations d'état indiquées par le premier message de réponse d'état (1003) et/ou par l'un quelconque des seconds messages de réponse (1004) comprennent au moins l'un des éléments suivants :
- une bande passante disponible (1101) ;
- une latence (1102) ;
- une file d'attente prioritaire (1103).

10. Première entité (100) selon la revendication 8 ou **9,** configurée également pour :
valider l'ensemble de transactions acceptées (400) sur la base de preuves vérifiables du résultat de consensus reçu de l'autre première entité (100') ;
déterminer, sur la base de chaque transaction **d'état** (1001, 1002) incluse dans l'ensemble de transactions acceptées (400), si les informations d'état indiquées par l'ensemble de transactions acceptées (400) sont suffisantes pour calculer une configuration de session (300) pour chaque seconde entité correspondante (200) ;
si les informations d'état sont suffisantes, calculer les configurations de session (300) pour les secondes entités correspondantes (200) ; et
si les informations d'état ne sont pas suffisantes, attendre de recevoir d'autres informations d'état indiquées par d'autres ensembles de transactions acceptées (400), jusqu'à ce que toutes les informations d'état soient suffisantes pour calculer les configurations de session (300) pour les secondes entités correspondantes (200).

11. Procédé (1400) de gestion de session décentralisée, le procédé (1400) comprenant :
la réception (1401) d'une première transaction (101) indiquant des informations d'un premier message lié à la gestion de session (402, 601, 1003) ;
l'envoi (1402) de la première transaction (101) à une ou plusieurs autres premières entités (100') ;
la réception (1403) d'une ou plusieurs secondes transactions (102) provenant d'une ou plusieurs autres premières entités (100'), dans lequel chaque seconde transaction (102) indique des informations d'un second message lié à la gestion de session (1004) ; et
la composition (1404) d'un premier ensemble de transactions (110), dans lequel le premier ensemble de transactions (110) comporte la première transaction (101) et/ou une ou plusieurs secondes transactions (102) ;
dans lequel le procédé (1400) est **caractérisé en ce qu'**il comprend également :
la réalisation (1405) d'un protocole de consensus distribué (103), conjointement avec l'une ou plusieurs autres premières entités (100'), pour obtenir un résultat de consensus indiquant si la première entité (100) est autorisée à proposer le premier ensemble de transactions (110) ou si l'une des autres premières entités (100') est autorisée à proposer un second ensemble de transactions (120) dans lequel la réalisation du protocole de consensus distribué (103) comprend la détermination d'une première entité gagnante parmi la première entité (100) et l'une ou plusieurs autres premières entités (100'), dans lequel la première entité gagnante est autorisée à proposer son premier ensemble de transactions (110) ou son second ensemble de transactions (120), respectivement,
dans lequel, si le résultat du consensus indique que la première entité (100) est autorisée à proposer le premier ensemble de transactions (110), le procédé (1400) comprend :
l'envoi du premier ensemble de transactions (110) accompagné d'une preuve vérifiable du résultat du consensus en tant qu'ensemble de transactions acceptées (400) à l'une ou plusieurs autres premières entités (100'),
dans lequel, si le résultat du consensus indique que la première entité (100) n'est pas autorisée à proposer le premier ensemble de transactions (110) et/ou que l'une des premières autres entités (100') est autorisée à proposer le second ensemble de transactions (120), le procédé comprend (1400) :
le rejet du premier ensemble de transactions (110) et la réception du second ensemble de transactions (120) en tant qu'ensemble de transactions acceptées (400) provenant de l'autre première entité (100').

12. Programme d'ordinateur comprenant un code de programme pour réaliser le procédé (1400) selon la revendication 11, lorsqu'il est exécuté sur un ordinateur.
